# FASCICULE DE BREVET EUROPEEN

(11) **EP 3 983 159 B1**
(45) Date de publication et mention de la délivrance du brevet: **27.12.2023**
(21) Numéro de dépôt: 20744090.0
(22) Date de dépôt: 15.06.2020
(51) Int. Cl.: B23B 49/02

(54) **OUTIL DE PERÇAGE**
BOHRWERKZEUG
DRILLING TOOL

(30) Priorité: 17.06.2019 FR 1906452
(43) Date de publication de la demande: 20.04.2022
(73) Titulaire: Advanced Electrical Tools, 59113 Seclin (FR)
(72) Inventeur: GUERIN, Sylvain, 59113 SECLIN (FR)
(74) Mandataire: Bureau Duthoit Legros Associés
(86) Numéro de dépôt international: PCT/FR2020/051024
(87) Numéro de publication internationale: WO 2020/254750

(56) Documents cités:
- DE-U1-202010 002 662
- FR-A1- 2 912 672
- FR-B1- 2 912 672
- US-A- 2 839 953

## Description

### Domaine technique

L'invention est relative à un ensemble de perçage, ainsi qu'à un procédé de perçage employant un tel ensemble de perçage, pour le perçage de pièces, et notamment de pièces employées dans le domaine aéronautique.

### Technique antérieure

Un outil de perçage coopérant avec un outillage comprenant au moins un orifice de guidage, employés dans le domaine aéronautique est connu par exemple du document EP 0761 351 B1.

L'outil de perçage décrit dans ce document, comme visible sur les figures de ce document, comprend :
- une pièce de nez creuse (repérée 16) avec une surface externe conique,
- une pince de serrage, avec une surface interne conique, montée sur la surface externe conique de la pièce de nez creuse, munie d'une partie avant élastique de blocage (repérée 102), solidaire d'une partie arrière de déplacement (repérée 104) et un mécanisme de déplacement, relié à la partie arrière de déplacement, permettant de déplacer la pince de serrage vers l'arrière le long de la pièce de nez creuse, de telle sorte que la partie avant de blocage est expansée de manière élastique radialement vers l'extérieur, en venant en contact avec la paroi interne d'un orifice de guidage d'un outillage coopérant avec ledit outil de perçage, de sorte à assurer l'arrêt en translation de la pièce de nez creuse par rapport audit outillage, et donc le positionnement de l'outil de perçage par rapport à l'outillage, et donc par rapport à la surface de la pièce à percer, afin d' effectuer l'opération de perçage souhaitée.

Selon les constations de l'inventeur, un tel outil de perçage présente plusieurs inconvénients.

Tout d'abord, avec un tel outil de perçage, il n'est pas possible d'appliquer un effort de poussée important sur la pièce à percer, en ce que l'arrêt en translation de l'outil de perçage par rapport à l'outillage, et donc par rapport à la pièce se fait par l'intermédiaire du frottement entre la partie élastique de blocage et la paroi interne de l'orifice de guidage de l'outillage, l'application d'un effort trop important à l'outil de perçage pouvant entraîner le déplacement de l'outil de perçage par rapport à l'outillage (et donc par rapport à la pièce à percer).

Egalement, une fois la pince de serrage dans sa position finale par rapport à la pièce de nez creuse assurant l'expansion radiale de la partie élastique de blocage de la pince de serrage et permettant l'arrêt en translation de l'outil de perçage par rapport à l'outillage, il n'est plus possible de faire varier la position longitudinale de la pince de serrage par rapport à la pièce de nez creuse, par exemple afin de compenser un déplacement relatif entre la surface de la pièce à percer et l'outil perçage lors du perçage. Il n'est ainsi pas possible de compenser la déformation de la surface de la pièce à percer engendré par l'effort de perçage (appliqué par la pièce de nez creuse sur ladite surface de la pièce à percer ou encore par l'outil de coupe, comme par exemple un foret traversant la pièce de nez creuse au cours du perçage), et de sorte à pouvoir faire varier l'effort appliqué par la pièce de nez creuse de l'outil de perçage à la pièce à percer, ce qui empêche de pouvoir maîtriser l'effort appliqué par l'outil de perçage à la pièce à percer. A l'inverse si l'outillage vient à se déformer (ou à bouger) au cours du perçage, le déplacement relatif entre la surface à percer et l'orifice de guidage de l'outillage ne peut pas non plus être compensé.

Ainsi, pour ces raisons, la précision du perçage réalisé à l'aide d'un tel outil de perçage peut s'en retrouver dégradée et ne pas correspondre à la forme et aux dimensions du perçage souhaité.

On connaît également du document FR 2 912 672 A1 un tel outil de perçage comportant un corps se prolongeant par un mandrin d'appui, dont l'extrémité est destinée à être au contact de la zone de recouvrement entre deux pièces de fuselage durant une opération de perçage.

Durant le perçage d'un orifice dans le fuselage, le foret est prévu pour se déplacer intérieurement et concentriquement par rapport au mandrin d'appui. Une bague expansible, destinée à être introduite dans un orifice de centrage d'une grille de perçage, épouse le mandrin selon une surface de contact conique. Cette surface de contact conique, prévue pour se rétrécir en se rapprochant de l'extrémité du mandrin, permet lors de l'application d'un mouvement relatif selon un axe central de surface de contact conique, entre le mandrin et la bague, une expansion de cette bague assurant son blocage dans l'orifice de centrage correspondant, et en venant appuyer contre la paroi interne de l'orifice de centrage.

Cet outil de perçage est tel que l'application du mouvement relatif entre la bague expansible et le mandrin d'appui est préférentiellement réalisée de manière à engendrer un déplacement du mandrin en appui contre la zone de recouvrement et à travers l'orifice de centrage correspondant, et de manière à obtenir un déplacement du mandrin dans le repère X, Y, Z de l'aéronef, entraînant avec lui la partie sollicitée en pression de la zone de recouvrement, la bague restant quant à elle sensiblement immobile dans ce même repère.

Néanmoins, ce déplacement relatif entre le mandrin et la bague d'expansion avec cette dernière demeurant immobilisée dans l'orifice de centrage, ne peut qu'être infime, car ce déplacement n'est permis que par une déformation élastique de la grille de perçage selon la direction radiale de l'orifice de centrage. La grille de perçage doit en effet nécessairement présenter une rigidité importante afin de remplir sa fonction, elle ne peut se déformer élastiquement que d'une valeur infime.

Cette infime course permise entre le mandrin et la bague d'expansion ne peut permettre de compenser un déplacement entre le mandrin et la zone de la pièce à percer ou augmenter l'effort exercé par le mandrin sur ladite zone de recouvrement, au cours d'une opération de perçage mise en oeuvre avec un tel outil, ce qui ne permet pas non plus d'améliorer la précision du perçage obtenu.

Le but de la présente invention est de pallier aux inconvénients des outils de perçage de l'art antérieur, en proposant un outil de perçage employé pour réaliser des perçages dans une pièce, en coopération avec un outillage comprenant au moins un orifice de guidage de l'outil de perçage, améliorant la précision des perçages réalisés.

Un autre but de la présente invention est de proposer un tel outil de perçage de conception simple et de coût de revient réduit.

D'autres buts et avantages apparaîtront au cours de la description qui va suivre qui n'est donnée qu'à titre indicatif et qui n'a pas pour but de la limiter.

### Résumé

Il est proposé un ensemble de perçage selon la revendication 1 comprenant un outil de perçage et un outillage comprenant au moins un orifice de guidage s'étendant entre une paroi proximale et une paroi distale de l'outillage, destinée à se trouver à proximité d'une pièce à percer avec l'outil de perçage, comprenant :
- une pièce de nez creuse présentant une surface externe de guidage, destinée à être traversée par un organe de perçage,
- une pince de serrage comportant une partie avant élastique de blocage, avec une extrémité distale et une extrémité proximale, montée coulissante sur la surface externe de guidage de la pièce de nez creuse par l'intermédiaire d'une surface de guidage interne, ladite partie avant élastique de blocage étant solidaire d'une partie arrière de déplacement, un mécanisme de déplacement étant relié à la partie arrière de déplacement afin de déplacer la pince de serrage vers l'arrière le long de la pièce de nez creuse de telle sorte que la partie avant élastique de blocage soit expansée radialement de manière élastique vers l'extérieur.

Selon l'invention, l'extrémité distale de la partie avant élastique de blocage comprend un bourrelet saillant radialement vers l'extérieur, configuré pour assurer l'arrêt en translation de l'outil de perçage par rapport à l'outillage, en venant en appui contre la paroi distale de l'outillage entourant ledit orifice guidage.

Selon l'invention, la pince de serrage est configurée pour passer :
- d'une position rétractée, correspondant à au moins une première position relative de la pince de serrage par rapport à la pièce de nez creuse, dans laquelle la pince de serrage est apte à être insérée et à coulisser le long de l'orifice de guidage depuis une embouchure de l'orifice de guidage sur la paroi proximale, à
- une position déployée, à partir d'une certaine course de la pince de serrage vers l'arrière de la pièce de nez creuse depuis ladite au moins une première position de la pince de serrage par rapport à la pièce de nez creuse, dans laquelle la partie avant élastique de blocage, y compris le bourrelet saillant radialement vers l'extérieur, est expansée radialement, avec un agencement du bourrelet tel que celui-ci est apte à venir en appui contre la paroi distale de l'outillage entourant ledit orifice guidage, empêchant le coulissement de la pince de serrage et de l'outil de perçage par rapport à l'orifice de guidage suivant le sens opposé à la direction de perçage.

Selon l'invention, la surface externe de guidage de la pièce de nez creuse est configurée de sorte à provoquer le passage de la pince de serrage de sa position rétractée vers sa position déployée, lors du déplacement de la pince de serrage vers l'arrière le long de la pièce de nez creuse sur une première section de longueur de la surface de externe guidage de la pièce de nez creuse, à partir de la première position de la pince de serrage par rapport à la pièce de nez creuse, la surface externe de guidage de la pièce de nez creuse comprenant une deuxième section de longueur, adjacente à la première section de longueur, configurée pour assurer le maintien de la pince de serrage en position déployée, sans augmentation du diamètre de la partie avant élastique de blocage par expansion radiale, de manière à autoriser l'avance de la pièce de nez creuse vers la surface de la pièce à percer pour compenser un déplacement relatif entre l'orifice de guidage de l'outillage et la surface de la pièce à percer au cours du perçage, ainsi que la déformation de la surface de la pièce à percer engendré par l'effort de perçage et ainsi permettre le contrôle de l'effort exercé par la pièce de nez creuse sur la surface de la pièce à percer.

Selon des caractéristiques optionnelles de l'invention, prises seules ou en combinaison :
- - la pièce de nez creuse comporte une extrémité distale, configurée pour venir en appui contre la surface de la pièce à percer afin d'exercer l'effort souhaité, la surface externe de guidage de la pièce de nez creuse comportant :
-- une première portion de guidage s'étendant depuis la proximité de ladite extrémité distale de la pièce de nez creuse,
-- une deuxième portion de guidage, en arrière de ladite première portion de guidage, formant la deuxième section de longueur,
-- une portion de liaison reliant la première portion de guidage à la deuxième portion de guidage en s'évasant, formant ladite première section de longueur,
et la partie avant élastique de blocage de la pince de serrage comprend un bourrelet saillant radialement vers l'intérieur comprenant ladite surface interne de guidage venant en appui contre la surface externe de guidage de la pièce de nez creuse, la surface externe de guidage de la pièce de nez creuse étant configurée de sorte que :
-- la position rétractée de la pince de serrage correspond à la position de la pince de serrage par rapport à la pièce de nez creuse dans laquelle la surface de guidage interne se trouve en contact avec la première portion de guidage de la surface externe de guidage de la pièce de nez creuse,
-- le passage de la position rétractée vers la position déployée de la pince de serrage correspond à la position de la pince de serrage par rapport à la pièce de nez creuse dans laquelle la surface de guidage interne coulisse sur la totalité de la longueur de la portion de liaison, ladite surface de guidage interne coopérant avec la deuxième portion de guidage de manière à garantir le maintien dans la position déployée de la pince de serrage, sans augmentation du diamètre de la partie avant élastique de blocage par expansion radiale, de manière à autoriser l'avance de la pièce de nez creuse vers la surface de la pièce à percer pour compenser un déplacement relatif entre l'orifice de guidage de l'outillage et la surface de la pièce à percer au cours du perçage, ainsi que la déformation de la surface de la pièce à percer engendrée par l'effort de perçage, et ainsi permettre le contrôle de l'effort de la pièce de nez creuse sur la surface de la pièce à percer,

- la première portion de guidage est sensiblement cylindrique, de diamètre D22, la deuxième portion de guidage est sensiblement cylindrique de diamètre D23, strictement supérieur à D22, la portion de liaison est conique;
- la surface de guidage interne de la partie avant élastique de blocage comporte une paroi cylindrique, configurée pour venir en appui contre ladite première portion de guidage et contre ladite deuxième portion de guidage ;
- la surface interne de guidage comporte une paroi de forme conique, en arrière de ladite paroi cylindrique, de conicité sensiblement égale à la conicité de la portion de liaison de la surface interne de guidage de la pièce de nez creuse ;
- le mécanisme de déplacement comporte deux pièces d'articulations articulées pivotantes chacune à ladite partie arrière de déplacement selon deux axes d'articulation positionnés de part et d'autre de l'axe longitudinal de la pince de serrage et confondus entre eux, les deux axes d'articulation de la première pièce d'articulation étant parallèles et symétriques aux deux axes d'articulation de la deuxième pièce d'articulation par rapport audit axe longitudinal de la pince de serrage, et chaque axe d'articulation est reçu dans un coussinet configuré pour coulisser dans un logement de forme correspondante ménagé dans la partie arrière de déplacement, selon une direction perpendiculaire à l'axe longitudinal de la pince de serrage et à l'axe d'articulation reçu dans ledit coussinet, et chacune desdites pièces d'articulation est articulée pivotante par rapport à une platine fixe selon un axe de pivotement, perpendiculaire audit axe longitudinal de la pince de serrage, les axes de pivotement de chacune des pièces d'articulation étant disposés symétrique entre eux par rapport à l'axe longitudinal de la pince de serrage, et parallèles auxdits axes d'articulation des pièces d'articulation à la partie arrière de déplacement, l'axe de pivotement d'une pièce d'articulation étant plus éloigné de l'axe longitudinal de la pince de serrage que ses axes d'articulation, et lesdites pièces d'articulation sont reliées à un actionneur configuré pour entraîner le pivotement contrarotatif simultané et coordonné de chacune des pièces d'articulation par rapport à la platine fixe autour de chacun de leurs axes de pivotement, de sorte à entraîner la rotation de chacune desdites pièces d'articulation par rapport à la partie arrière de déplacement de la pince de serrage autour de leurs axes d'articulation respectifs et le coulissement de chacun des coussinets dans leur logement, générant un coulissement de la pince de serrage par rapport à la pièce de nez creuse le long de l'axe longitudinal de la pince de serrage.

Selon l'invention, l'orifice de guidage et l'outil de perçage sont configurés de sorte que dans ladite position déployée de la pince de serrage, le bourrelet saillant radialement vers l'extérieur de la partie avant élastique de blocage vient en appui contre la paroi distale de l'outillage entourant ledit orifice guidage, empêchant le coulissement de la pince de serrage et de l'outil de perçage par rapport à l'orifice de guidage suivant le sens opposé à la direction de perçage.

Selon un mode de réalisation, l'orifice de guidage est de forme sensiblement cylindrique de longueur L11, de diamètre D11, tels que la longueur L11 est strictement inférieure à la longueur L31 de la partie avant élastique de blocage, et le diamètre D11 est strictement inférieur au diamètre D33 du bourrelet saillant radialement vers l'extérieur de la partie avant élastique de blocage, lorsque la pince de serrage est dans la position déployée.

Selon un mode de réalisation, la partie avant élastique de blocage de la pince de serrage de l'outil de perçage présente une surface externe de guidage s'étendant en arrière du bourrelet saillant vers l'extérieur, dont le diamètre est compris entre une valeur minimale D37min, dans ladite position rétractée et une valeur maximale D37max, dans ladite position déployée, telles que la valeur maximale D37max du diamètre de la surface externe de guidage est strictement inférieur au diamètre D11 de l'orifice de guidage.

L'invention concerne encore un procédé de perçage selon la revendication 9 d'une pièce mettant en oeuvre un ensemble de perçage selon l'un des modes de réalisation de l'invention, comprenant les étapes suivantes :
- insertion de la pince de serrage de l'outil de perçage, dans sa position rétractée, dans l'orifice de guidage de l'outillage, à partir de son embouchure sur la paroi proximale de l'outillage, jusqu'à ce que le bourrelet saillant radialement vers l'extérieur de la partie avant élastique de blocage ressorte entièrement de l'orifice de guidage au niveau de son embouchure sur la paroi distale de l'outillage,
- déplacement de la pince de serrage vers l'arrière le long de la pièce de nez creuse sur la première section de longueur de la surface de guidage externe de la pièce de nez creuse, jusqu'à la position déployée de la pince de serrage, générant l'arrêt en coulissement de l'outil de perçage par rapport à l'orifice de guidage suivant le sens opposé au sens de perçage, le bourrelet saillant radialement vers l'extérieur de la partie avant élastique de blocage se trouvant en appui sur la paroi distale de l'outillage,
- application d'un effort contrôlé par la pièce de nez creuse sur la surface de la pièce à percer, par déplacement de la pince de serrage d'une course d'ajustement sur la deuxième section de longueur de la surface de guidage externe de la pièce de nez creuse, sans augmentation du diamètre de la partie avant élastique de blocage pour compenser un déplacement relatif entre l'orifice de guidage de l'outillage et la surface de la pièce à percer au cours du perçage, ainsi que la déformation de la surface de la pièce à percer engendré par l'effort de perçage.

### Brève description des dessins

D'autres caractéristiques, détails et avantages apparaîtront à la lecture de la description détaillée ci-après, et à l'analyse des dessins annexés, sur lesquels :
**Fig. 1**

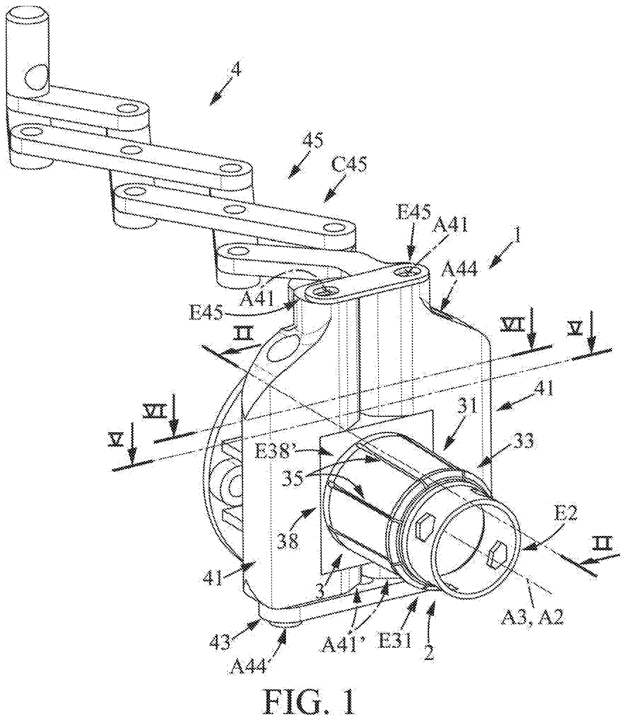

   [Fig. 1] montre une vue en perspective d'un outil de perçage.
**Fig. 2a**

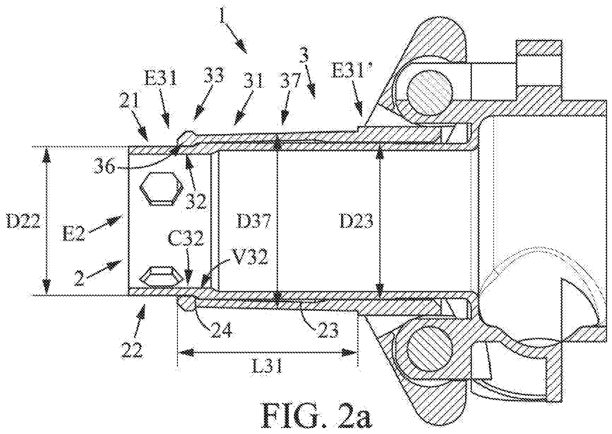

   [Fig. 2a] montre une vue en perspective selon la ligne de coupe II-II de la figure 1 de l'outil de coupe de la figure 1, sans le mécanisme de déplacement, la pince de serrage se trouvant dans une première position par rapport à la pièce de nez creuse, la pince de serrage étant en position rétractée.
**Fig. 2b**

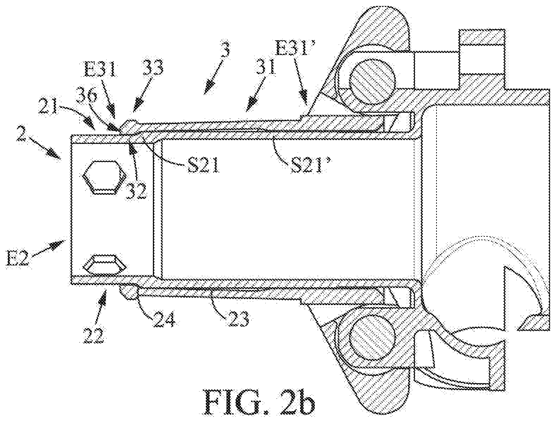

   [Fig. 2b] montre une vue en perspective selon la ligne de coupe II-II de la figure 1 de l'outil de coupe de la figure 1, sans le mécanisme de déplacement, la pince de serrage se trouvant dans une deuxième position par rapport à la pièce de nez creuse, la pince de serrage étant en position intermédiaire entre sa position rétractée et sa position déployée.
**Fig. 2c**

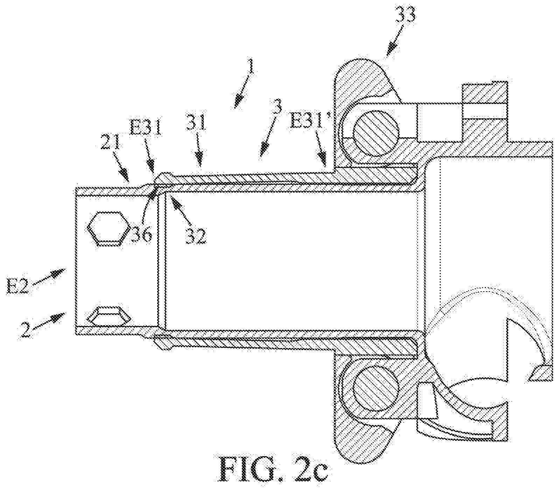

   [Fig. 2c] montre une vue en perspective selon la ligne de coupe II-II de la figure 1 de l'outil de coupe de la figure 1, sans le mécanisme de déplacement, la pince de serrage se trouvant dans une troisième position par rapport à la pièce de nez creuse, la pince de serrage étant en position déployée.
**Fig. 3a**

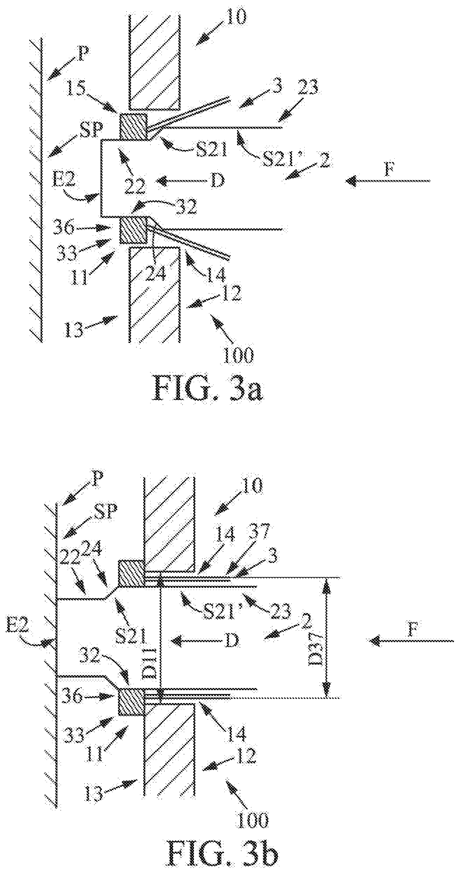

   [Fig. 3a] montre une vue schématique en coupe d'un ensemble de perçage et d'une pièce à percer selon un mode de réalisation conforme à l'invention, l'outil de perçage se trouvant dans une première position par rapport à l'outillage, la pince de serrage étant en position rétractée.
**Fig. 3b**
   [Fig. 3b] montre une vue schématique en coupe d'un ensemble de perçage et d'une pièce à percer selon un mode de réalisation conforme à l'invention, l'outil de perçage se trouvant dans une deuxième position par rapport à l'outillage, la pince de serrage étant en position déployée.
**Fig. 3c**

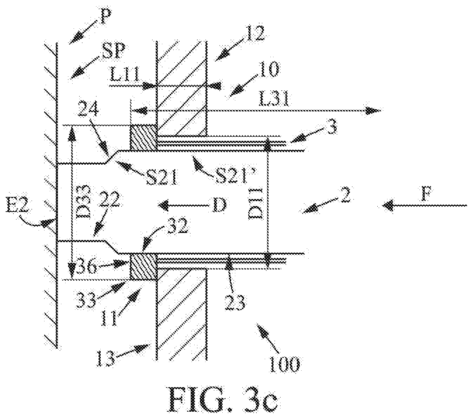

   [Fig. 3c] montre une vue schématique en coupe d'un ensemble de perçage et d'une pièce à percer selon un mode de réalisation conforme à l'invention, l'outil de perçage se trouvant dans ladite deuxième position par rapport à l'outillage, la pince de serrage étant en position déployée, et la partie avant élastique de la pince de serrage se trouvant décalée vers l'arrière de la pince de serrage, par rapport à sa position sur la figure 3b.
**Fig. 4**

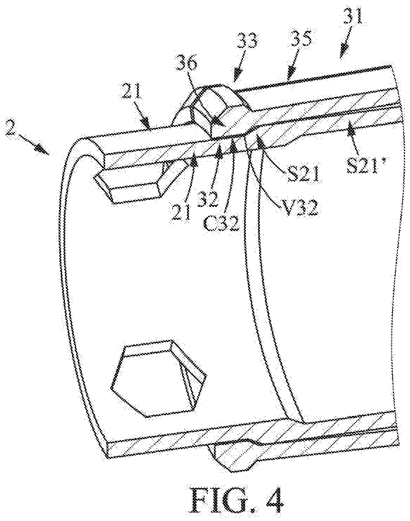

   [Fig. 4] montre une vue en perspective en coupe selon la ligne II-II de la figure 1, du détail de l'outil de perçage de la figure 1, au niveau de l'extrémité distale de la pièce de nez creuse.
**Fig. 5**

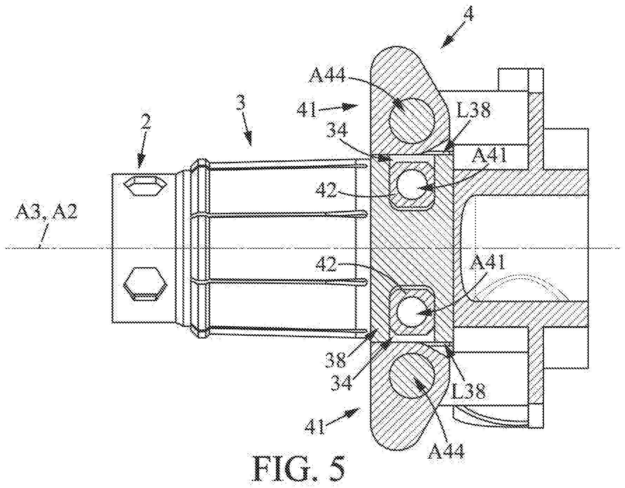

   [Fig. 5] montre une vue en coupe selon la ligne V-V de la figure 1, de l'outil de perçage de la figure 1.
**Fig. 6**

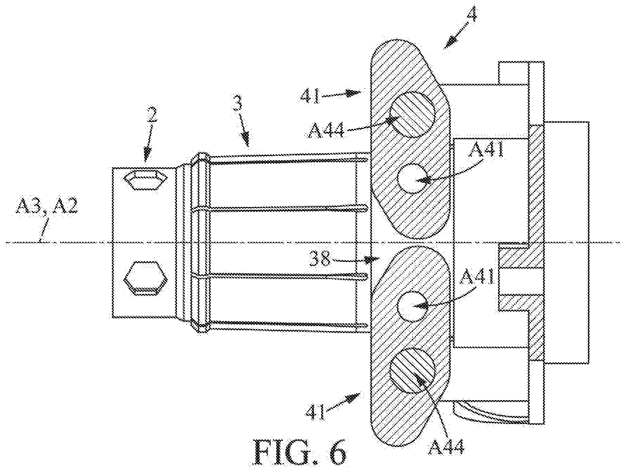

   [Fig. 6] montre une vue en coupe selon la ligne VI-VI de la figure 1, de l'outil de perçage de la figure 1.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Comme visible sur les exemples de réalisation des figures 3a à 3c, la direction de perçage D correspond à la direction de déplacement de l'organe de perçage (non représenté) lors d'une opération de perçage réalisée dans la pièce P à l'aide de l'outil de perçage 1.

Dans l'ensemble de la présente demande, la direction longitudinale des éléments de l'outil de perçage 1 correspond sensiblement à la direction de plus grande dimension de ces éléments, et est sensiblement parallèle à ladite direction de perçage D. L'axe longitudinal A3 de la pince de serrage 3 (confondu avec l'axe longitudinal A2 de la pièce de nez creuse 2) est par exemple représenté sur les figures 5 et 6.

Egalement, la direction radiale correspond à une direction perpendiculaire à ladite direction longitudinale passant par le centre des pièces de révolution de l'outil de perçage 1, et notamment la pièce de nez creuse 2 ou la partie avant élastique de blocage 31 de la pince de serrage 3.

L'invention concerne un ensemble de perçage comprenant un outil de perçage 1 destiné à coopérer avec un outillage 10 comprenant au moins un orifice de guidage 11 s'étendant entre une paroi proximale 12 et une paroi distale 13 de l'outillage 10, destinée à se trouver à proximité d'une pièce P à percer avec l'outil de perçage 1, comprenant :
- une pièce de nez creuse 2 présentant une surface externe de guidage 21, destinée à être traversée par un organe de perçage,
- une pince de serrage 3 comportant une partie avant élastique de blocage 31, avec une extrémité distale E31 et une extrémité proximale E31', montée coulissante sur la surface externe de guidage 21 de la pièce de nez creuse 2 par l'intermédiaire d'une surface de guidage interne 32, ladite partie avant élastique de blocage 31 étant solidaire d'une partie arrière de déplacement 38, un mécanisme de déplacement 4 étant relié à la partie arrière de déplacement 38 afin de déplacer la pince de serrage 3 vers l'arrière le long de la pièce de nez creuse 2 de telle sorte que la partie avant élastique de blocage 31 soit expansée radialement de manière élastique vers l'extérieur.

Selon l'invention, l'extrémité distale E31 de la partie avant élastique de blocage 31 comprend un bourrelet 33 saillant radialement vers l'extérieur, configuré pour assurer l'arrêt en translation de l'outil de perçage 1 par rapport à l'outillage 10, en venant en appui contre la paroi distale 13 de l'outillage 10 entourant ledit orifice guidage 11.

Selon l'invention, la pince de serrage 3 est configurée pour passer :
- d'une position rétractée, correspondant à au moins une première position relative de la pince de serrage 3 par rapport à la pièce de nez creuse 2, dans laquelle la pince de serrage 3 est apte à être insérée et à coulisser le long de l'orifice de guidage 11 depuis une embouchure 14 de l'orifice de guidage sur la paroi proximale 12, à
- une position déployée, à partir d'une certaine course de la pince de serrage 3 vers l'arrière de la pièce de nez creuse 2 depuis ladite au moins une première position de la pince de serrage 3 par rapport à la pièce de nez creuse 2, dans laquelle la partie avant élastique de blocage 31, y compris le bourrelet 33 saillant radialement vers l'extérieur, est expansée radialement, avec un agencement du bourrelet 33 tel que celui-ci est apte à venir en appui contre la paroi distale 13 de l'outillage 10 entourant ledit orifice guidage 11, empêchant le coulissement de la pince de serrage 3 et de l'outil de perçage 1 par rapport à l'orifice de guidage 11 suivant le sens opposé à la direction de perçage D.

Grâce à l'outil de perçage 1 selon l'invention, le maintien en position de l'outil de perçage 1 par rapport à l'outillage 10 et donc par rapport à la pièce à percer P est assuré de façon fiable par l'intermédiaire du bourrelet 33 saillant radialement vers l'extérieur venant en appui contre la paroi distale 13 de l'outillage 10.

Même en cas d'application d'un effort de perçage important, orienté selon ladite direction D de perçage, l'appui entre le bourrelet 33 et la paroi distale 13 de l'outillage 10 est maintenu et l'arrêt en translation de l'outil de perçage 1, selon le sens opposé à ladite direction D de perçage, est assuré, et notamment contrairement aux dispositifs de l'art antérieur prévoyant un arrêt en translation de l'outil de perçage par frottement sur la paroi interne de l'orifice de guidage, comme par exemple celui décrit dans le document EP 0 761 351 B1 ou dans le document FR 2 912 672 A1.

Dans l'ensemble de la présente demande l'effort de perçage exercé par l'outil de perçage 1 sur la surface SP de la pièce P à percer comprend l'effort F exercé par la pièce de nez creuse 2 sur la surface SP de la pièce P à percer, ainsi que l'effort exercé par l'outil de coupe, comme par exemple un foret, sur ladite surface SP de la pièce P à percer.

Un tel outil de perçage 1, de conception simple et de coût de revient réduit, permet donc de réaliser des perçages dans une pièce P, et notamment dans le domaine de l'aéronautique, avec une précision améliorée, en ce que la position de l'outil de perçage 1 est contrôlée au cours de l'opération de perçage, et même dans en cas d'application d'un effort de perçage important, qui modifierait éventuellement la position de la pièce de nez creuse 2 par rapport à la surface SP de la pièce P à percer.

Comme visible plus particulièrement sur l'exemple de réalisation de la figure 1, la partie avant élastique de blocage 31 est de forme sensiblement conique, et afin de lui garantir son élasticité pour permettre le passage de la pince de serrage 3 de la position rétractée à la position déployée, et afin de contraindre la surface de guidage interne 32 de la pince de serrage 3 contre la surface de guidage externe 21 de la pièce de nez creuse 2, à la manière d'un ressort, une pluralité de fentes 35, peuvent être prévues, réparties angulairement de façon régulière sur la partie avant élastique de blocage 31 et s'étendant sur toute sa longueur.

La surface externe de guidage 21 de la pièce de nez creuse 2 est configurée de sorte à provoquer le passage de la pince de serrage 3 de sa position rétractée vers sa position déployée, lors du déplacement de la pince de serrage 3 vers l'arrière le long de la pièce de nez creuse 2 sur une première section de longueur S21 de la surface de externe guidage 21 de la pièce de nez creuse 2, à partir de la première position de la pince de serrage 3 par rapport à la pièce de nez creuse 2, la surface externe de guidage 21 de la pièce de nez creuse 2 comprenant une deuxième section de longueur S21', adjacente à la première section de longueur S21, configurée pour assurer le maintien de la pince de serrage 3 en position déployée, sans augmentation du diamètre de la partie avant élastique de blocage 31 par expansion radiale, de manière à autoriser l'avance de la pièce de nez creuse 2 vers la surface SP de la pièce P à percer pour compenser un déplacement relatif entre l'orifice de guidage et la surface de la pièce à percer au cours du perçage, y compris la déformation de la surface SP de la pièce P à percer engendré par l'effort de perçage exercé notamment par la pièce de nez creuse 2 sur la surface SP de la pièce P à percer ou encore par l'outil de coupe, comme par exemple un foret traversant la pièce de nez creuse 2.

Il est ainsi possible de contrôler l'effort F exercé par la pièce de nez creuse 2 sur la surface SP de la pièce P à percer, et même en cas d'un déplacement relatif entre l'outillage 10 et la surface SP de pièce P à percer.

Ainsi, grâce à cette disposition de l'invention, la course supplémentaire de la pince de serrage 3 par rapport à la pièce de nez creuse 2, permise grâce à la deuxième section de longueur S21', permet de déplacer la pièce de nez creuse 2 par rapport à la pince de serrage 3 de sorte à la rapprocher de la surface SP de la pièce P à percer, afin d'augmenter, ou encore de réduire l'effort exercé par ladite pièce de nez creuse 2 sur la surface SP de la pièce P à percer ou simplement de compenser un déplacement de ladite pièce de nez creuse 2 par rapport à la surface SP de la pièce P à percer, au cours d'une opération de perçage mise en oeuvre grâce à 1 ensemble de perçage selon l'invention.

Cela offre une maîtrise complète de la position de la pièce de nez creuse 2 par rapport à la surface SP de la pièce P à percer, ainsi que de l'effort F appliqué par ladite pièce de nez creuse 2 sur la surface SP de la pièce P à percer.

Comme visible sur les exemples de réalisation des figures 2c et 3c, en rapprochant, ou encore en éloignant, la pièce de nez creuse 2 de la surface SP de la pièce P à percer, il est possible de contrôler l'effort de perçage appliqué par ledit outil de perçage 1 sur la surface SP de la pièce à percer, et contrairement aux outils de perçage de l'état de la technique, comme par exemple celui décrit dans le document EP 0 761 351 B1, configurés pour assurer l'immobilisation de l'outil de perçage par rapport à l'outil de perçage pour une position fixée de la pièce de nez creuse par rapport à la pince de serrage, qui ne peut être modifiée ultérieurement, afin de faire varier l'effort de perçage appliqué par ledit outil de perçage ou pour rapprocher la pièce de nez creuse de la surface de la pièce à percer, afin éventuellement de compenser la déformation de la surface de la pièce à percer.

Dans le dispositif décrit dans le document FR 2 912 672 A1, ladite bague d'expansion ne comporte pas une telle première section de longueur ni une telle deuxième section de longueur, et l'infime déplacement permis entre le mandrin et la bague d'expansion avec la bague d'expansion demeurant immobilisée dans l'orifice de centrage, ne peut permettre un tel contrôle de l'effort exercé par l'outil sur la pièce à percer, ni la compensation d'un déplacement relatif entre le mandrin et ladite pièce à percer.

La deuxième section de longueur S21' de la surface de guidage 21 de la pièce de nez creuse, peut par exemple être configurée pour autoriser l'avance de la pièce de nez creuse 2 vers la surface SP de la pièce P à percer, après le passage de la pince de serrage 3 de sa position rétractée vers sa position déployée, selon une course supérieure à 0,1 mm, de préférence supérieure à 0,3 mm, et de manière encore préférée supérieure à 0,5 mm. A cet effet, ladite deuxième section de longueur S21' peut présenter une longueur supérieure à 0,1 mm, de préférence supérieure à 0,3 mm, et de manière encore préférée supérieure à 0,5 mm.

Selon un mode de réalisation, la pièce de nez creuse 2 comporte une extrémité distale E2, configurée pour venir en appui contre la surface SP de la pièce P à percer afin d'exercer l'effort F souhaité, la surface externe de guidage 21 de la pièce de nez creuse 2 comportant :
- une première portion de guidage 22 s'étendant depuis la proximité de ladite extrémité distale E2 de la pièce de nez creuse 2,
- une deuxième portion de guidage 23, en arrière de ladite première portion de guidage 22, formant la deuxième section de longueur S21',
- une portion de liaison 24 reliant la première portion de guidage 22 à la deuxième portion de guidage 23 en s'évasant, formant ladite première section de longueur S21.

Selon un tel mode de réalisation, la partie avant élastique de blocage 31 de la pince de serrage 3 comprend un bourrelet 36 saillant radialement vers l'intérieur comprenant ladite surface interne de guidage 32 venant en appui contre la surface externe de guidage 21 de la pièce de nez creuse 2, et la surface externe de guidage 21 de la pièce de nez creuse 2 est configurée de sorte que :
- la position rétractée de la pince de serrage 3 correspond à la position de la pince de serrage 3 par rapport à la pièce de nez creuse 2 dans laquelle la surface de guidage interne 32 se trouve en contact avec la première portion de guidage 22 de la surface externe de guidage 21 de la pièce de nez creuse 2,
- le passage de la position rétractée vers la position déployée de la pince de serrage 3 correspond à la position de la pince de serrage 3 par rapport à la pièce de nez creuse 2 dans laquelle la surface de guidage interne 32 coulisse sur la totalité de la longueur de la portion de liaison 24, ladite surface de guidage interne 32 coopérant avec la deuxième portion de guidage 23 de manière à garantir le maintien dans la position déployée de la pince de serrage 3, sans augmentation du diamètre de la partie avant élastique de blocage 32 par expansion radiale, de manière à autoriser l'avance de la pièce de nez creuse 2 vers la surface SP de la pièce P à percer pour compenser un déplacement relatif de l'orifice de guidage de l'outillage par rapport à la surface de la pièce à percer lors du perçage, ainsi que la déformation de la surface SP de la pièce P à percer engendrée par l'effort de perçage et ainsi le contrôle de l'effort F de la pièce de nez creuse 2 sur la surface SP de la pièce P à percer.

Comme visible sur les exemples de réalisation des figures 2a à 4, le bourrelet 36 saillant radialement vers l'intérieur peut être positionné en vis-à-vis du bourrelet 33 saillant radialement vers l'extérieur, chacun étant positionné de part et d'autre de la paroi de la partie avant élastique de blocage 31.

La surface interne de guidage 32 de la partie avant élastique de blocage 31 peut avantageusement s'étendre sur toute la longueur du bourrelet 36 saillant radialement vers l'intérieur.

Le fait de prévoir une portion de liaison 24 de forme évasée entre ladite première portion de guidage 22 et ladite deuxième portion de guidage 23 permet d'assurer une transition progressive entre la position rétractée et la position déployée de la pince de serrage 3 et sans générer d'efforts excessifs entre ladite surface interne de guidage 32 et la dite surface externe de guidage 21.

Selon un mode de réalisation :
- la première portion de guidage 22 est sensiblement cylindrique, de diamètre D22,
- la deuxième portion de guidage 23 est sensiblement cylindrique de diamètre D23, strictement supérieur à D22,
- la portion de liaison 24 est conique.

De façon bien connue, la conicité d'un cône correspond à la valeur de l'angle au sommet de ce cône.

Avantageusement, et comme visible plus particulièrement sur les exemples de réalisation des figures 2a à 2c et 3a à 3c, la longueur de la deuxième portion de guidage 23 peut être nettement supérieure à la longueur de la première portion de guidage 22, car la première portion de guidage 22 ne sert pas au passage de la pince de serrage 3 de sa position rétractée à sa position déployée, mais doit juste être suffisamment longue pour recevoir le bourrelet 36 saillant radialement vers l'intérieur, lorsque la pince de serrage 3 est en position rétractée.

Selon un mode de réalisation, la surface de guidage interne 32 de la partie avant élastique de blocage 31 comporte une paroi cylindrique C32, configurée pour venir en appui contre ladite première portion de guidage 22 et contre ladite deuxième portion de guidage 23.

Avantageusement, ladite paroi cylindrique C32 de la surface interne de guidage 32 peut correspondre à au moins une partie de la longueur du bourrelet 36 saillant radialement vers l'intérieur et avoir une forme complémentaire de la première portion de guidage 22 et de la deuxième portion de guidage 23, afin de faciliter le guidage de la partie avant élastique de blocage 31 sur la surface externe de guidage de la pièce de nez creuse 2.

Selon un mode de réalisation, la surface interne de guidage 32 comporte une paroi de forme conique V32, en arrière de ladite paroi cylindrique C32, de conicité sensiblement égale à la conicité de la portion de liaison 24 de la surface interne de guidage 21 de la pièce de nez creuse 2.

Une telle paroi de forme conique V32 permet de faciliter le coulissement du bourrelet 36 saillant radialement vers l'intérieur sur la portion de liaison 24 de la surface interne de guidage 21 de la pièce de nez creuse 2, afin d'assurer un déploiement progressif de la pince de serrage 3 depuis sa position rétractée vers sa position déployée, et sans générer d'efforts excessifs entre ladite surface interne de guidage 32 et la dite surface externe de guidage 21.

Selon un mode de réalisation, le mécanisme de déplacement 4 comporte deux pièces d'articulations 41 articulées pivotantes chacune à ladite partie arrière de déplacement 38 selon deux axes d'articulation A41, A41' positionnés de part et d'autre de l'axe longitudinal A3 de la pince de serrage 3, et confondus entre eux, les deux axes d'articulation A41, A41' de la première pièce d'articulation 41 étant parallèles et symétriques aux deux axes d'articulation A41, A41' de la deuxième pièce d'articulation 41 par rapport audit axe longitudinal A3 de la pince de serrage 3.

Selon un tel mode de réalisation, chaque axe d'articulation A41, A41' est reçu dans un coussinet 42, comme visible sur l'exemple de réalisation de la figure 5, en particulier de forme sensiblement parallélépipédique, de section transversale sensiblement carré, configuré pour coulisser dans un logement 34 de forme correspondante ménagé dans la partie arrière de déplacement 38, selon une direction perpendiculaire à l'axe longitudinal de la pince de serrage 3 et à l'axe d'articulation A41, A41' reçu dans ledit coussinet 42.

Ledit logement 34 peut en particulier être prévu débouchant sur une paroi latérale L38 de la partie arrière de déplacement 38.

Selon un tel mode de réalisation, et comme visible sur les exemples de réalisation des figures 1, 5 et 6, chacune desdites pièces d'articulation 41 est articulée pivotante par rapport à une platine fixe 43 selon un axe de pivotement A44, perpendiculaire audit axe longitudinal A3 de la pince de serrage 3, les axes de pivotement A44 de chacune des pièce d'articulation 41 étant disposés symétrique entre eux par rapport à l'axe longitudinal A3 de la pince de serrage 3, et parallèles auxdits axes d'articulation A41, A41' des pièces d'articulation 41 à la partie arrière de déplacement 38, l'axe de pivotement A44 d'une pièce d'articulation 41 étant plus éloigné de l'axe longitudinal A3 de la pince de serrage 3 que ses axes d'articulation A41, A41'.

Selon un tel mode de réalisation, lesdites pièces d'articulation 41 sont reliées à un actionneur 45 configuré pour entraîner le pivotement contrarotatif simultané et coordonné de chacune des pièces d'articulation 41 par rapport à la platine fixe 43 autour de chacun de leurs axes de pivotement A41, A41', de sorte à entraîner la rotation de chacune desdites pièces d'articulation 41 par rapport à la partie arrière de déplacement 38 de la pince de serrage 3 autour de leurs axes d'articulation A41, A41' respectifs et le coulissement de chacun des coussinets 42 dans leur logement 34, générant un coulissement de la pince de serrage 3 par rapport à la pièce de nez creuse 2 le long de l'axe longitudinal A3 de la pince de serrage 3.

Ainsi, un tel mécanisme de déplacement 4 pour l'outil de perçage 1permet d'exercer sur la partie arrière de déplacement 38 un effort de traction réparti de manière équilibrée sur les quatre coussinets 42 autour de l'axe longitudinal A3, à savoir un effort d'axe sensiblement confondu à l'axe longitudinal A3.

Il est donc possible d'effectuer le coulissement de la pince de serrage 3 par rapport à la pièce de nez creuse 2 selon l'axe longitudinal A3 de la pince de serrage 3, et de sorte que ledit axe longitudinal A3 de de la pince de serrage 3 demeure confondu avec l'axe longitudinal A2 de la pièce de nez creuse 2, sans mise en biais susceptible de générer un arc-boutement entre ces deux pièces lors de leur coulissement relatif.

Comme visible sur l'exemple de réalisation de la figure 1, ledit actionneur 45 peut comprendre un mécanisme de déplacement à ciseaux C45 dont les deux extrémités E45 sont chacune articulées à une pièce d'articulation 41, au niveau de leurs axes d'articulation A41 respectifs.

L'orifice de guidage 11 et l'outil de perçage 1 sont configurés de sorte que dans ladite position déployée de la pince de serrage 3, le bourrelet 33 saillant radialement vers l'extérieur de la partie avant élastique de blocage 31 vient en appui contre la paroi distale 13 de l'outillage 10 entourant ledit orifice guidage 11, empêchant le coulissement de la pince de serrage 3 et de l'outil de perçage 1 par rapport à l'orifice de guidage 11 suivant le sens opposé à la direction D de perçage.

Un tel ensemble de perçage 100 permet de réaliser des perçages dans une pièce P, et notamment dans le domaine de l'aéronautique, avec une précision améliorée, comme expliqué précédemment concernant l'outil de perçage 1 selon l'invention, en ce que la position de l'outil de perçage 1 au cours de l'opération de perçage et l'effort F appliqué par la pièce de nez creuse 2 à la surface SP de la pièce P à percer sont complètement maîtrisés.

De façon bien connue, un outillage 10 peut consister en une plaque munie d'une paroi proximale 12 et une paroi distale 13, laquelle est prévue pour être positionnée à proximité de la surface SP d'une pièce P à percer, et munie d'au moins un orifice de guidage 11, recevant intérieurement ledit outil de perçage 1, afin de guider celui-ci par rapport à la pièce P à percer, afin de s'assurer du positionnement adéquat du perçage réalisé avec ledit outil de perçage 1.

Selon un mode de réalisation, l'orifice de guidage 11 est de forme sensiblement cylindrique de longueur L11, de diamètre D11, tels que la longueur L11 est strictement inférieure à la longueur L31 de la partie avant élastique de blocage 31, et le diamètre D11 est strictement inférieur au diamètre D33 du bourrelet 33 saillant radialement vers l'extérieur de la partie avant élastique de blocage 31, lorsque la pince de serrage 3 est dans la position déployée.

Comme visible plus particulièrement sur l'exemple de réalisation de la figure 3c, un tel diamètre D11 de l'orifice de guidage 11 par rapport au diamètre D33 du bourrelet 33 saillant radialement vers l'extérieur de la partie avant élastique de blocage 31 permet de s'assurer que ledit bourrelet 33 se retrouve bien en appui contre la paroi distale 13 de l'outillage 10, lorsque la pince de serrage 3 est en position déployée, et de sorte à assurer l'arrêt en translation de l'outil de perçage 1 par rapport à l'outillage 10, et donc par rapport à la pièce P à percer, selon le sens opposé à ladite direction D de perçage.

La pince de serrage 3 peut être configurée de sorte que la différence entre le diamètre D11 de l'orifice de guidage 11 et le diamètre D33 du bourrelet 33 saillant radialement vers l'extérieur de la partie avant élastique de blocage 31, lorsque la pince de serrage 3 est dans la position déployée, peut être supérieure à 0,1 mm, de préférence supérieure à 0,5 mm, et de manière encore préférée supérieure à 1 mm.

Egalement, une telle longueur L11 de l'orifice de guidage 11 par rapport à la longueur L31 de la partie avant élastique de blocage 31 permet que l'on puisse faire coulisser l'outil de perçage 1, avec la pince de serrage 3 en position rétractée, dans l'orifice de guidage 11 jusqu'à ce que le bourrelet 33 saillant radialement vers l'extérieur se retrouve en dehors de l'orifice de guidage 11 à proximité de la paroi distale 13, et qu'il soit encore possible de coulisser la pince de serrage 3 par rapport à la pièce de nez creuse 2 vers l'arrière, de sorte à provoquer l'expansion radiale de la pince de serrage 3 et le passage de la position rétractée à la position déployée, voire encore de garantir que dans ladite position déployée de la pince de serrage 3 de l'outil de perçage 1 selon l'invention, une fois le bourrelet saillant 33 en appui contre la paroi distale 13 de l'outillage 10, après le parcours de ladite première section de longueur S21 de la surface externe de guidage 21 de la pièce de nez creuse 2, ladite pince de serrage 3 puisse parcourir ladite deuxième section de longueur S21' de la pièce de nez creuse 2, afin de continuer de déplacer la pince de serrage 3 vers l'arrière par rapport à la pièce de nez creuse 2, sans augmentation du diamètre de la partie avant élastique de blocage 31, et afin de contrôler l'effort F exercé par la pièce de nez creuse 2 sur la surface SP de la pièce P à percer, ainsi que la position de la pièce de nez creuse 2 par rapport à la surface SP de la pièce P à percer.

Selon un mode de réalisation, la partie avant élastique de blocage 31 de la pince de serrage 3 de l'outil de perçage 1 présente une surface externe de guidage 37 s'étendant en arrière du bourrelet 33 saillant vers l'extérieur, dont le diamètre D37 est compris entre une valeur minimale D37min, dans ladite position rétractée et une valeur maximale D37max, dans ladite position déployée, telles que la valeur maximale D37max du diamètre D37 de la surface externe de guidage 37 est strictement inférieur au diamètre D11 de l'orifice de guidage 11.

Grâce à cette disposition avantageuse de l'invention, on s'assure que la partie avant élastique de blocage 31 demeure apte à coulisser par rapport à l'orifice de guidage 11, que la pince de serrage 3 soit en position rétractée ou en position déployée.

Comme visible plus particulièrement sur l'exemple de réalisation de la figure 2a, dans le cas où ladite surface de guidage externe 37 de la partie avant élastique de blocage 31 est de forme sensiblement conique, au moins dans la position déployée de la pince de serrage 3, comme décrit plus haut, le diamètre D37 de ladite surface de guidage 37 est variable sur la longueur de ladite partie avant élastique de blocage 31, mais néanmoins toujours inférieur à ladite valeur maximale D37max.

L'invention concerne encore un procédé de perçage d'une pièce P mettant en oeuvre un ensemble de perçage 100 selon l'un des modes de réalisation décrit précédemment, dans lequel la surface externe de guidage 21 de la pièce de nez creuse 2 est configurée de sorte à provoquer le passage de la pince de serrage 3 de sa position rétractée vers sa position déployée, lors du déplacement de la pince de serrage 3 vers l'arrière le long de la pièce de nez creuse 2 sur une première section de longueur S21 de la surface de externe guidage 21 de la pièce de nez creuse 2, à partir de la première position de la pince de serrage 3 par rapport à la pièce de nez creuse 2, la surface externe de guidage 21 de la pièce de nez creuse 2 comprenant une deuxième section de longueur S21', adjacente à la première section de longueur S21, configurée pour assurer le maintien de la pince de serrage 3 en position déployée, sans augmentation du diamètre de la partie avant élastique de blocage 31 par expansion radiale, de manière à autoriser l'avance de la pièce de nez creuse 2 vers la surface SP de la pièce P à percer et ainsi à contrôler l'effort F exercé par la pièce de nez creuse 2 sur la surface SP de la pièce P à percer.

Ledit procédé de perçage comprend les étapes suivantes :
- insertion de la pince de serrage 3 de l'outil de perçage 1, dans sa position rétractée, dans l'orifice de guidage 11 de l'outillage 10, à partir de son embouchure 14 sur la paroi proximale 12 de l'outillage 10, jusqu'à ce que le bourrelet 33 saillant radialement vers l'extérieur de la partie avant élastique de blocage 31 ressorte entièrement de l'orifice de guidage 11 au niveau de son embouchure 15 sur la paroi distale de l'outillage,
- déplacement de la pince de serrage 3 vers l'arrière le long de la pièce de nez creuse 2 sur la première section de longueur S21 de la surface de guidage externe de la pièce de nez creuse 2, jusqu'à la position déployée de la pince de serrage 3, générant l'arrêt en coulissement de l'outil de perçage 1 par rapport à l'orifice de guidage 11 suivant le sens opposé à la direction D de perçage, le bourrelet 33 saillant radialement vers l'extérieur de la partie avant élastique de blocage 31 se trouvant en appui sur la paroi distale 13 de l'outillage 10,
- application d'un effort F contrôlé par la pièce de nez creuse 2 sur la surface SP pièce P à percer, par déplacement de la pince de serrage 3 d'une course d'ajustement sur la deuxième section de longueur S21' de la surface de guidage externe 21 de la pièce de nez creuse 2, sans augmentation du diamètre de la partie avant élastique de blocage 31, pour compenser un déplacement relatif entre l'orifice de guidage 11 de l'outillage 10 et la surface SP de la pièce P à percer au cours du perçage, ainsi que la déformation de la surface SP de la pièce P à percer engendrée par l'effort de perçage.

Les étapes du procédé selon l'invention sont illustrées de façon schématique sur les exemples de réalisation des figures 3a à 3c.

Un tel procédé permet d'obtenir un perçage à la précision améliorée de ladite pièce P à percer, en ce que la position de l'outil de perçage par rapport à l'outillage 10, et donc par rapport à la surface SP de la pièce P à percer, ainsi que l'effort de perçage peuvent être maîtrisés.

### Liste des signes de référence

1. Outil de perçage
2. Pièce de nez creuse
A2. Axe longitudinal
E2. Extrémité distale
21. Surface externe de guidage
S21. Première section de longueur
S21' . Deuxième section de longueur
22. Première portion de guidage
23. Deuxième portion de guidage
24. Portion de liaison
3. Pince de serrage
A3. Axe longitudinal
31. Partie avant élastique de blocage
E31. Extrémité distale
E31'. Extrémité proximale
L31. Longueur
32. Surface de guidage interne
C32. Paroi cylindrique
V32. Paroi de forme conique
33. Bourrelet
D33. Diamètre
34. Logement
35. Fentes
36. Bourrelet
37. Surface externe de guidage
D37. Diamètre
38. Partie arrière de déplacement
4. Mécanisme de déplacement
41. Pièce d'articulation
A41, A41'. Axe d'articulation
42. Coussinet
43. Platine fixe
A44. Axe de pivotement
45. Actionneur
C45. Mécanisme de déplacement à ciseaux
E45. Extrémité
10. Outillage
11. Orifice de guidage
D 11. Diamètre
L11. Longueur
12. Paroi proximale
13. Paroi distale
14, 15. Embouchure
100. Ensemble de perçage
D. Direction de perçage
F. Effort

## Revendications

1. Ensemble de perçage (100) comprenant :
- un outil de perçage (1),
- un outillage (10) comprenant au moins un orifice de guidage (11) s'étendant entre une paroi proximale (12) et une paroi distale (13) de l'outillage (10), destinée à se trouver à proximité d'une pièce (P) à percer avec l'outil de perçage (1),
l'outil de perçage (1) étant destiné à coopérer avec l'outillage (10) et comprenant :
- une pièce de nez creuse (2) présentant une surface externe de guidage (21), destinée à être traversée par un organe de perçage,
- une pince de serrage (3) comportant une partie avant élastique de blocage (31), avec une extrémité distale (E31) et une extrémité proximale (E31'), montée coulissante sur la surface externe de guidage (21) de la pièce de nez creuse (2) par l'intermédiaire d'une surface de guidage interne (32), ladite partie avant élastique de blocage (31) étant solidaire d'une partie arrière de déplacement (38), un mécanisme de déplacement (4) étant relié à la partie arrière de déplacement (38) afin de déplacer la pince de serrage (3) vers l'arrière le long de la pièce de nez creuse (2) de telle sorte que la partie avant élastique de blocage (31) soit expansée radialement de manière élastique vers l'extérieur,
dans lequel l'extrémité distale (E31) de la partie avant élastique de blocage (31) comprend un bourrelet (33) saillant radialement vers l'extérieur, configuré pour assurer l'arrêt en translation de l'outil de perçage (1) par rapport à l'outillage (10), en venant en appui contre la paroi distale (13) de l'outillage (10) entourant ledit orifice guidage (11),
dans lequel la pince de serrage (3) est configurée pour passer :
- d'une position rétractée, correspondant à au moins une première position relative de la pince de serrage (3) par rapport à la pièce de nez creuse (2), dans laquelle la pince de serrage (3) est apte à être insérée et à coulisser le long de l'orifice de guidage (11) depuis une embouchure (14) de l'orifice de guidage (11) sur la paroi proximale (12), à
- une position déployée, à partir d'une certaine course de la pince de serrage (3) vers l'arrière de la pièce de nez creuse (2) depuis ladite au moins une première position de la pince de serrage (3) par rapport à la pièce de nez creuse (2), dans laquelle la partie avant élastique de blocage (31), y compris le bourrelet (33) saillant radialement vers l'extérieur, est expansée radialement, avec un agencement du bourrelet (33) tel que celui-ci est apte à venir en appui contre la paroi distale (13) de l'outillage (10) entourant ledit orifice guidage (11), empêchant le coulissement de la pince de serrage (3) et de l'outil de perçage (1) par rapport à l'orifice de guidage (11) suivant le sens opposé à la direction (D) de perçage,
dans lequel la surface externe de guidage (21) de la pièce de nez creuse (2) est configurée de sorte à provoquer le passage de la pince de serrage (3) de sa position rétractée vers sa position déployée, lors du déplacement de la pince de serrage (3) vers l'arrière le long de la pièce de nez creuse (2) sur une première section de longueur (S21) de la surface de externe guidage (21) de la pièce de nez creuse (2), à partir de la première position de la pince de serrage (3) par rapport à la pièce de nez creuse (2), la surface externe de guidage (21) de la pièce de nez creuse (2) comprenant une deuxième section de longueur (S21'), adjacente à la première section de longueur (S21), configurée pour assurer le maintien de la pince de serrage (3) en position déployée, sans augmentation du diamètre de la partie avant élastique de blocage (31) par expansion radiale, de manière à autoriser l'avance de la pièce de nez creuse (2) vers la surface (SP) de la pièce (P) à percer pour compenser un déplacement relatif entre l'orifice de guidage (11) de l'outillage (10) et la surface (SP) de la pièce (P) à percer au cours du perçage, ainsi que la déformation de la surface (SP) de la pièce (P) à percer engendrée par l'effort de perçage, et ainsi permettre le contrôle de l'effort (F) exercé par la pièce de nez creuse (2) sur la surface (SP) de la pièce (P) à percer,
et dans lequel l'orifice de guidage (11) et l'outil de perçage (1) sont configurés de sorte que dans ladite position déployée de la pince de serrage (3), le bourrelet (33) saillant radialement vers l'extérieur de la partie avant élastique de blocage (31) vient en appui contre la paroi distale (13) de l'outillage (10) entourant ledit orifice guidage (11), empêchant le coulissement de la pince de serrage (3) et de l'outil de perçage (1) par rapport à l'orifice de guidage (11) suivant le sens opposé à la direction (D) de perçage..

2. Ensemble de perçage (100) selon la revendication 1, dans lequel la pièce de nez creuse (2) comporte une extrémité distale (E2), configurée pour venir en appui contre la surface (SP) de la pièce (P) à percer afin d'exercer l'effort (F) souhaité, la surface externe de guidage (21) de la pièce de nez creuse (2) comportant :
- une première portion de guidage (22) s'étendant depuis la proximité de ladite extrémité distale (E2) de la pièce de nez creuse (2),
- une deuxième portion de guidage (23), en arrière de ladite première portion de guidage (22), formant la deuxième section de longueur (S21'),
- une portion de liaison (24) reliant la première portion de guidage (22) à la deuxième portion de guidage (23) en s'évasant, formant ladite première section de longueur (S21),
et dans lequel la partie avant élastique de blocage (31) de la pince de serrage (3) comprend un bourrelet (33) saillant radialement vers l'intérieur comprenant ladite surface interne de guidage (32) venant en appui contre la surface externe de guidage (21) de la pièce de nez creuse (2),
et dans lequel la surface externe de guidage (21) de la pièce de nez creuse (2) est configurée de sorte que :
- la position rétractée de la pince de serrage (3) correspond à la position de la pince de serrage (3) par rapport à la pièce de nez creuse (2) dans laquelle la surface de guidage interne (21) se trouve en contact avec la première portion de guidage (22) de la surface externe de guidage (21) de la pièce de nez creuse (2),
- le passage de la position rétractée vers la position déployée de la pince de serrage correspond à la position de la pince de serrage (3) par rapport à la pièce de nez creuse (2) dans laquelle la surface de guidage interne (32) coulisse sur la totalité de la longueur de la portion de liaison (24), ladite surface de guidage interne (32) coopérant avec la deuxième portion de guidage (23) de manière à garantir le maintien dans la position déployée de la pince de serrage (3), sans augmentation du diamètre de la partie avant élastique de blocage (31) par expansion radiale, de manière à autoriser l'avance de la pièce de nez creuse (2) vers la surface (SP) de la pièce (P) à percer pour compenser un déplacement relatif entre l'orifice de guidage (11) de l'outillage (10) et la surface (SP) de la pièce (P) à percer au cours du perçage, ainsi que la déformation de la surface (SP) de la pièce (P) à percer engendré par l'effort de perçage, et ainsi permettre le contrôle de l'effort (F) de la pièce de nez creuse (2) sur la surface (SP) de la pièce (P) à percer.

3. Ensemble de perçage (100) selon la revendication 2, dans lequel :
- la première portion de guidage (22) est sensiblement cylindrique, de diamètre (D22),
- la deuxième portion de guidage (23) est sensiblement cylindrique de diamètre (D23), strictement supérieur à (D22),
- la portion de liaison (24) est conique.

4. Ensemble de perçage (100) selon la revendication 3, dans lequel la surface de guidage interne (36) de la partie avant élastique de blocage (31) comporte une paroi cylindrique (C32), configurée pour venir en appui contre ladite première portion de guidage (22) et contre ladite deuxième portion de guidage (23).

5. Ensemble de perçage (100) selon la revendication 4, dans lequel la surface interne de guidage (21) comporte une paroi de forme conique (V32), en arrière de ladite paroi cylindrique (C32), de conicité sensiblement égale à la conicité de la portion de liaison (24) de la surface interne de guidage (21) de la pièce de nez creuse (2).

6. Ensemble de perçage (100) selon l'une des revendications 1 à 5, dans lequel le mécanisme de déplacement (4) comporte deux pièces d'articulations (41) articulées pivotantes chacune à ladite partie arrière de déplacement (38) selon deux axes d'articulation (A41, A41') positionnés de part et d'autre de l'axe longitudinal (A3) de la pince de serrage (3) et confondus entre eux, les deux axes d'articulation (A41, A41') de la première pièce d'articulation (41) étant parallèles et symétriques aux deux axes d'articulation (A41, A41') de la deuxième pièce d'articulation (41) par rapport audit axe longitudinal (A3) de la pince de serrage (3),
dans lequel chaque axe d'articulation (A41, A41') est reçu dans un coussinet (42) configuré pour coulisser dans un logement (34) de forme correspondante ménagé dans la partie arrière de déplacement (38), selon une direction perpendiculaire à l'axe longitudinal (A3) de la pince de serrage (3) et à l'axe d'articulation (A41, A41') reçu dans ledit coussinet (42),
dans lequel chacune desdites pièces d'articulation (41) est articulée pivotante par rapport à une platine fixe (43) selon un axe de pivotement (A44), perpendiculaire audit axe longitudinal (A3) de la pince de serrage (3), les axes de pivotement (A44) de chacune des pièces d'articulation (41) étant disposés symétrique entre eux par rapport à l'axe longitudinal (A3) de la pince de serrage (3), et parallèles auxdits axes d'articulation (A41, A41') des pièces d'articulation (41) à la partie arrière de déplacement (38), l'axe de pivotement (A44) d'une pièce d'articulation (41) étant plus éloigné de l'axe longitudinal (A3) de la pince de serrage (3) que ses axes d'articulation (A41, A41'),
et dans lequel lesdites pièces d'articulation (41) sont reliées à un actionneur (45) configuré pour entraîner le pivotement contrarotatif simultané et coordonné de chacune des pièces d'articulation (41) par rapport à la platine fixe (43) autour de chacun de leurs axes de pivotement (A44), de sorte à entraîner la rotation de chacune desdites pièces d'articulation (41) par rapport à la partie arrière de déplacement (38) de la pince de serrage (3) autour de leurs axes d'articulation (A41, A41') respectifs et le coulissement de chacun des coussinets (42) dans leur logement (34), générant un coulissement de la pince de serrage (3) par rapport à la pièce de nez creuse (2) le long de l'axe longitudinal (A3) de la pince de serrage (3).

7. Ensemble de perçage (100) selon l'une quelconque des revendications 1 à 6, dans lequel l'orifice de guidage (11) est de forme sensiblement cylindrique de longueur (L11), de diamètre (D11), tels que la longueur (L11) est strictement inférieure à la longueur (L31) de la partie avant élastique de blocage (31), et le diamètre (D11) est strictement inférieur au diamètre (D33) du bourrelet (33) saillant radialement vers l'extérieur de la partie avant élastique de blocage (31), lorsque la pince de serrage (3) est dans la position déployée.

8. Ensemble de perçage (100) selon la revendication 7, dans lequel la partie avant élastique de blocage (31) de la pince de serrage (3) de l'outil de perçage (1) présente une surface externe de guidage (37) s'étendant en arrière du bourrelet (33) saillant vers l'extérieur, dont le diamètre (D37) est compris entre une valeur minimale (D37min), dans ladite position rétractée et une valeur maximale (D37max), dans ladite position déployée, telles que la valeur maximale (D37max) du diamètre (D37) de la surface externe de guidage (37) est strictement inférieur au diamètre (D11) de l'orifice de guidage (11).

9. Procédé de perçage d'une pièce (P) mettant en oeuvre un ensemble de perçage (100) selon l'une des revendications 1 à 8, comprenant les étapes suivantes :
- insertion de la pince de serrage (3) de l'outil de perçage (1), dans sa position rétractée, dans l'orifice de guidage (11) de l'outillage (10), à partir de son embouchure (14) sur la paroi proximale (12) de l'outillage (10), jusqu'à ce que le bourrelet (33) saillant radialement vers l'extérieur de la partie avant élastique de blocage (31) ressorte entièrement de l'orifice de guidage (11) au niveau de son embouchure (15) sur la paroi distale (13) de l'outillage (10),
- déplacement de la pince de serrage (3) vers l'arrière le long de la pièce de nez creuse (2) sur la première section de longueur (S21) de la surface de guidage externe (21) de la pièce de nez creuse (2), jusqu'à la position déployée de la pince de serrage (3), générant l'arrêt en coulissement de l'outil de perçage (1) par rapport à l'orifice de guidage (11) suivant le sens opposé à la direction (D) de perçage, le bourrelet (33) saillant radialement vers l'extérieur de la partie avant élastique de blocage (31) se trouvant en appui sur la paroi distale (13) de l'outillage (10),
- application d'un effort (F) contrôlé par la pièce de nez creuse (2) sur la surface (SP) de la pièce (P) à percer, par déplacement de la pince de serrage (3) d'une course d'ajustement sur la deuxième section de longueur(S21') de la surface de guidage externe (21) de la pièce de nez creuse (2), sans augmentation du diamètre de la partie avant élastique de blocage (31), pour compenser un déplacement relatif entre l'orifice de guidage (11) de l'outillage (10) et la surface (SP) de la pièce (P) à percer au cours du perçage, ainsi que la déformation de la surface (SP) de la pièce (P) à percer engendrée par l'effort de perçage.

## Patentansprüche

1. Bohreranordnung (100), umfassend:
- ein Bohrwerkzeug (1),
- ein Werkzeug (10) mit mindestens einer Führungsöffnung (11), die sich zwischen einer proximalen Wand (12) und einer distalen Wand (13) des Werkzeugs (10) erstreckt und dazu bestimmt ist, sich in der Nähe eines Werkstücks (P) zu befinden, das mit dem Bohrwerkzeug (1) gebohrt werden soll,
wobei das Bohrwerkzeug (1) dazu bestimmt ist, mit dem Werkzeug (10) zusammenzuwirken, und umfasst:
- ein hohles Nasenstück (2) mit einer äußeren Führungsfläche (21), die dazu bestimmt ist, von einem Bohrorgan durchdrungen zu werden,
- eine Spannzange (3) mit einem vorderen elastischen Blockierabschnitt (31) mit einem distalen Ende (E31) und einem proximalen Ende (E31'), der über eine innere Führungsfläche (32) gleitend an der äußeren Führungsfläche (21) des hohlen Nasenstücks (2) angebracht ist, wobei der vordere elastische Blockierabschnitt (31) fest mit einem hinteren Verschiebungsabschnitt (38) verbunden ist, wobei ein Verschiebemechanismus (4) mit dem hinteren Verschiebeteil (38) verbunden ist, um die Spannzange (3) nach hinten entlang des hohlen Nasenstücks (2) zu verschieben, so dass der vordere elastische Blockierabschnitt (31) radial elastisch nach außen ausgedehnt wird,
wobei das distale Ende (E31) des vorderen elastischen Blockierabschnitts (31) einen radial nach außen vorstehenden Wulst (33) umfasst, der so konfiguriert ist, dass er den translatorischen Anschlag des Bohrwerkzeugs (1) in Bezug auf das Werkzeug (10) gewährleistet, indem er gegen die distale Wand (13) des Werkzeugs (10), die die Führungsöffnung (11) umgibt, zur Anlage kommt,
bei dem die Spannzange (3) so konfiguriert ist, dass sie durchläuft:
- aus einer zurückgezogenen Position, die mindestens einer ersten relativen Position der Spannzange (3) in Bezug auf das hohle Nasenstück (2) entspricht, in der die Spannzange (3) geeignet ist, eingeführt zu werden und entlang der Führungsöffnung (11) von einer Mündung (14) der Führungsöffnung (11) an der proximalen Wand (12) zu gleiten, zu
- eine ausgefahrene Position, ab einem bestimmten Hub der Spannzange (3) in Richtung der Rückseite des hohlen Nasenstücks (2) von der mindestens einen ersten Position der Spannzange (3) in Bezug auf das hohle Nasenstück (2), in der der vordere elastische Blockierabschnitt (31), einschließlich des radial nach außen vorstehenden Wulstes (33), radial aufgeweitet ist, mit einer derartigen Anordnung des Wulstes (33), dass dieser geeignet ist, gegen die distale Wand (13) des Werkzeugs (10), die die Führungsöffnung (11) umgibt, zur Anlage zu kommen, wodurch das Gleiten der Spannzange (3) und des Bohrwerkzeugs (1) in Bezug auf die Führungsöffnung (11) in der Richtung entgegengesetzt zur Bohrrichtung (D) verhindert wird,
wobei die äußere Führungsfläche (21) des hohlen Nasenstücks (2) so konfiguriert ist, dass sie den Übergang der Spannzange (3) aus ihrer zurückgezogenen Position in ihre ausgefahrene Position bewirkt, wenn die Spannzange (3) entlang des hohlen Nasenstücks (2) über einen ersten Längenabschnitt (S21) der äußeren Führungsfläche (21) des hohlen Nasenstücks (2) von der ersten Position der Spannzange (3) in Bezug auf das hohle Nasenstück (2) aus nach hinten bewegt wird, wobei die äußere Führungsfläche (21) des hohlen Nasenstücks (2) einen zweiten Längenabschnitt (S21') umfasst, der an den ersten Längenabschnitt (S21) angrenzt, und konfiguriert ist, um das Halten der Spannzange (3) in der ausgefahrenen Position zu gewährleisten, ohne den Durchmesser des vorderen elastischen Blockierabschnitts (31) durch radiale Ausdehnung zu vergrößern, um den Vorschub des hohlen Nasenstücks (2) in Richtung der Oberfläche (SP) des zu bohrenden Teils (P) zuzulassen, um eine relative Verschiebung zwischen der Führungsöffnung (11) des Werkzeugs (10) und der Oberfläche (SP) des zu bohrenden Teils (P) während des Bohrens zu kompensieren, sowie die Verformung der Oberfläche (SP) des zu bohrenden Werkstücks (P), die durch die Bohrkraft erzeugt wird, und um die Kontrolle der Kraft (F) zu ermöglichen, die von dem hohlen Nasenstück (2) auf die Oberfläche (SP) des zu bohrenden Werkstücks (P) ausgeübt wird,
und wobei die Führungsöffnung (11) und das Bohrwerkzeug (1) so konfiguriert sind, dass in der ausgefahrenen Position der Spannzange (3) der radial nach außen vorstehende Wulst (33) des vorderen elastischen Blockierabschnitts (31) an der die Führungsöffnung (11) umgebenden distalen Wand (13) des Werkzeugs (10) zur Anlage kommt, dadurch das Gleiten der Spannzange (3) und des Bohrwerkzeugs (1) in Bezug auf die Führungsöffnung (11) entgegen der Bohrrichtung (D) verhindert wird.

2. Bohreranordnung (100) nach Anspruch 1, bei der das hohle Nasenstück (2) ein distales Ende (E2) aufweist, das so konfiguriert ist, dass es an der Oberfläche (SP) des zu bohrenden Teils (P) zur Anlage kommt, um die gewünschte Kraft (F) auszuüben, wobei die äußere Führungsfläche (21) des hohlen Nasenstücks (2) umfasst:
- einen ersten Führungsabschnitt (22), der sich von der Nähe des distalen Endes (E2) des hohlen Nasenstücks (2) aus erstreckt,
- einen zweiten Führungsabschnitt (23), der hinter dem ersten Führungsabschnitt (22) liegt und den zweiten Längenabschnitt (S21') bildet,
- einen Verbindungsabschnitt (24), der den ersten Führungsabschnitt (22) mit dem zweiten Führungsabschnitt (23) verbindet, indem er sich aufweitet und den ersten Längenabschnitt (S21) bildet,
und wobei der vordere elastische Blockierabschnitt (31) der Spannzange (3) einen radial nach innen vorstehenden Wulst (33) aufweist, der die innere Führungsfläche (32) umfasst, die an der äußeren Führungsfläche (21) des hohlen Nasenstücks (2) anliegt,
und wobei die äußere Führungsfläche (21) des hohlen Nasenstücks (2) so konfiguriert ist, dass:
- die zurückgezogene Position der Spannzange (3) der Position der Spannzange (3) in Bezug auf das hohle Nasenstück (2) entspricht, in der die innere Führungsfläche (21) in Kontakt mit dem ersten Führungsabschnitt (22) der äußeren Führungsfläche (21) des hohlen Nasenstücks (2) ist,
- der Übergang von der zurückgezogenen Position zur ausgefahrenen Position der Spannzange der Position der Spannzange (3) in Bezug auf das hohle Nasenstück (2) entspricht, in der die innere Führungsfläche (32) über die gesamte Länge des Verbindungsabschnitts (24) gleitet, wobei die innere Führungsfläche (32) mit dem zweiten Führungsabschnitt (23) zusammenwirkt, um das Halten der Spannzange (3) in der ausgefahrenen Position zu gewährleisten, ohne den Durchmesser des vorderen elastischen Blockierabschnitts (31) durch radiale Ausdehnung zu vergrößern, so dass der Vorschub des hohlen Nasenstücks (2) in Richtung der Oberfläche (SP) des zu bohrenden Teils (P) zugelassen wird, um eine relative Verschiebung zwischen der Führungsöffnung (11) des Werkzeugs (10) und der Oberfläche (SP) des zu bohrenden Teils (P) während des Bohrens zu kompensieren, sowie die Verformung der Oberfläche (SP) des zu bohrenden Werkstücks (P), die durch die Bohrkraft erzeugt wird, und somit die Kontrolle der Kraft (F) des hohlen Nasenstücks (2) auf die Oberfläche (SP) des zu bohrenden Werkstücks (P) zu ermöglichen.

3. Bohreranordnung (100) nach Anspruch 2, wobei:
- der erste Führungsabschnitt (22) im Wesentlichen zylindrisch ist und einen Durchmesser (D22) hat,
- der zweite Führungsabschnitt (23) im Wesentlichen zylindrisch ist mit einem Durchmesser (D23), der strikt größer ist als (D22),
- der Verbindungsabschnitt (24) konisch ist.

4. Bohreranordnung (100) nach Anspruch 3, wobei die innere Führungsfläche (36) des vorderen elastischen Blockierabschnitts (31) eine zylindrische Wand (C32) aufweist, die so gestaltet ist, dass sie gegen den ersten Führungsabschnitt (22) und gegen den zweiten Führungsabschnitt (23) anliegt.

5. Bohreranordnung (100) nach Anspruch 4, bei der die innere Führungsfläche (21) eine konisch geformte Wand (V32) hinter der zylindrischen Wand (C32) aufweist, deren Konizität im Wesentlichen gleich der Konizität des Verbindungsabschnitts (24) der inneren Führungsfläche (21) des hohlen Nasenstücks (2) ist.

6. Bohreranordnung (100) nach einem der Ansprüche 1 bis 5, bei der der Verschiebemechanismus (4) zwei Gelenkstücke (41) umfasst, die jeweils schwenkbar an dem hinteren Verschiebeteil (38) entlang zweier Gelenkachsen (A41, A41'), die auf beiden Seiten der Längsachse (A3) der Spannzange (3) positioniert sind und ineinander übergehen, wobei die beiden Gelenkachsen (A41, A41') des ersten Gelenkteils (41) parallel und symmetrisch zu den beiden Gelenkachsen (A41, A41') des zweiten Gelenkteils (41) in Bezug auf die Längsachse (A3) der Spannzange (3) sind,
wobei jeder Gelenkbolzen (A41, A41') in einer Lagerbuchse (42) aufgenommen wird, die so konfiguriert ist, dass sie in einer Aufnahme (34) mit entsprechender Form, die in dem hinteren Verschiebungsteil (38) ausgebildet ist, in einer Richtung senkrecht zur Längsachse (A3) der Spannzange (3) und zur Längsachse des Gelenkbolzens (A41, A41'), der in der Lagerbuchse (42) aufgenommen wird, gleitet,
wobei jedes der Gelenkteile (41) in Bezug auf eine feste Platte (43) um eine Schwenkachse (A44) schwenkbar angelenkt ist, die senkrecht zur Längsachse (A3) der Spannzange (3) verläuft, wobei die Schwenkachsen (A44) jedes der Gelenkteile (41) symmetrisch zueinander in Bezug auf die Längsachse (A3) der Spannzange (3) angeordnet sind, und parallel zu den Gelenkachsen (A41, A41') der Gelenkstücke (41) an dem hinteren Verschiebungsteil (38), wobei die Schwenkachse (A44) eines Gelenkstücks (41) weiter von der Längsachse (A3) der Spannzange (3) entfernt ist als seine Gelenkachsen (A41, A41'),
und wobei die Gelenkteile (41) mit einem Stellglied (45) verbunden sind, das so konfiguriert ist, dass es das gleichzeitige und koordinierte gegenläufige Schwenken jedes der Gelenkteile (41) in Bezug auf die feste Platte (43) um jede ihrer Schwenkachsen (A44) bewirkt, so dass die Drehung jedes der Gelenkstücke (41) in Bezug auf das hintere Verschiebungsteil (38) der Spannzange (3) um ihre jeweiligen Gelenkachsen (A41, A41') und das Gleiten jeder der Lagerschalen (42) in ihrer Aufnahme (34) bewirkt wird, wodurch eine Verschiebung der Spannzange (3) in Bezug auf das hohle Nasenstück (2) entlang der Längsachse (A3) der Spannzange (3) erzeugt wird.

7. Bohreranordnung (100) nach einem der Ansprüche 1 bis 6, wobei die Führungsöffnung (11) eine im Wesentlichen zylindrische Form mit einer Länge (L11), einem Durchmesser (D11) aufweist, derart, dass die Länge (L11) strikt kleiner ist als die Länge (L31) des vorderen elastischen Blockierabschnitts (31), und der Durchmesser (D11) strikt kleiner ist als der Durchmesser (D33) des Wulstes (33), der radial nach außen von dem vorderen elastischen Blockierabschnitt (31) vorsteht, wenn sich die Spannzange (3) in der ausgefahrenen Position befindet.

8. Bohreranordnung (100) nach Anspruch 7, bei der der vordere elastische Blockierabschnitt (31) der Spannzange (3) des Bohrwerkzeugs (1) eine äußere Führungsfläche (37) aufweist, die sich hinter dem nach außen vorstehenden Wulst (33) erstreckt, deren Durchmesser (D37) zwischen einem Minimalwert (D37min) in der zurückgezogenen Position und einem Maximalwert (D37max) in der ausgefahrenen Position liegt, derart, dass der Maximalwert (D37max) des Durchmessers (D37) der äußeren Führungsfläche (37) strikt kleiner als der Durchmesser (D11) der Führungsöffnung (11) ist.

9. Verfahren zum Bohren eines Werkstücks (P), bei dem eine Bohreranordnung (100) nach einem der Ansprüche 1 bis 8 eingesetzt wird, mit den folgenden Schritten:
- Einführen der Spannzange (3) des Bohrwerkzeugs (1) in ihrer zurückgezogenen Position in die Führungsöffnung (11) des Werkzeugs (10) von ihrer Mündung (14) an der proximalen Wand (12) des Werkzeugs (10) aus, bis der radial nach außen vorstehende Wulst (33) des vorderen elastischen Verriegelungsabschnitts (31) an seiner Mündung (15) an der distalen Wand (13) des Werkzeugs (10) vollständig aus der Führungsöffnung (11) heraustritt,
- Verschieben der Spannzange (3) nach hinten entlang des hohlen Nasenstücks (2) über den ersten Längenabschnitt (S21) der äußeren Führungsfläche (21) des hohlen Nasenstücks (2) bis zur ausgefahrenen Position der Spannzange (3), wodurch das Bohrwerkzeug (1) in Bezug auf die Führungsöffnung (11) entgegen der Bohrrichtung (D) verschiebbar arretiert wird, wobei sich der radial nach außen vorstehende Wulst (33) des vorderen elastischen Blockierabschnitts (31) an der distalen Wand (13) des Werkzeugs (10) befindet,
- Aufbringen einer durch das hohle Nasenstück (2) gesteuerten Kraft (F) auf die Oberfläche (SP) des zu bohrenden Werkstücks (P) durch Verschieben der Spannzange (3) um einen Einstellhub über den zweiten Längenabschnitt (S21') der äußeren Führungsfläche (21) des hohlen Nasenstücks (2), ohne Vergrößerung des Durchmessers des vorderen elastischen Klemmteils (31), um eine relative Verschiebung zwischen der Führungsöffnung (11) des Werkzeugs (10) und der Oberfläche (SP) des zu bohrenden Teils (P) während des Bohrens sowie die durch die Bohrkraft verursachte Verformung der Oberfläche (SP) des zu bohrenden Teils (P) zu kompensieren.

## Claims

1. Drilling assembly (100) comprising :
- a drilling tool (1),
- a tooling (10) comprising at least one guide orifice (11) extending between a proximal wall (12) and a distal wall (13) of the tooling (10), intended to be located near a part (P) to be drilled with the drilling tool (1), the drilling tool (1) intended to cooperate with the tooling (10) and comprising:
- a hollow nose part (2) having an outer guide surface (21), through which a drilling member is intended to pass,
- a gripping clamp (3) including an elastic front blocking part (31), with a distal end (E31) and a proximal end (E31'), slidingly mounted on the outer guide surface (21) of the hollow nose part (2) via an inner guide surface (32), said elastic front blocking part (31) being rigidly connected to a rear movement part (38), a movement mechanism (4) being connected to the rear movement part (38) in order to move the gripping clamp (3) rearward along the hollow nose part (2) in such a way that the elastic front blocking part (31) is expanded radially in an elastic manner towards the outside,
wherein the distal end (E31) of the elastic front blocking part (31) comprises a bead (33) protruding radially towards the outside, configured to ensure the stopping in translation of the drilling tool (1) with respect to the tooling (10), by bearing against the distal wall (13) of the tooling (10) surrounding said guide orifice (11),
wherein the gripping clamp (3) is configured to go:
- from a retracted position, corresponding to at least one first relative position of the gripping clamp (3) with respect to the hollow nose part (2), in which the gripping clamp (3) is capable of being inserted and sliding along the guide orifice (11) from a mouth (14) of the guide orifice (11) on the proximal wall (12), to
- a deployed position, starting from a certain travel of the gripping clamp (3) towards the rear of the hollow nose part (2) from said at least one first position of the gripping clamp (3) with respect to the hollow nose part (2), in which the elastic front blocking part (31), including the bead (33) protruding radially towards the outside, is expanded radially, with an arrangement of the bead (33) such that the latter is capable of bearing against the distal wall (13) of the tooling (10) surrounding said guide orifice (11), preventing the sliding of the gripping clamp (3) and of the drilling tool (1) with respect to the guide orifice (11) in the direction opposite to the drilling direction (D),
wherein the outer guide surface (21) of the hollow nose part (2) is configured so as to cause the passage of the gripping clamp (3) from its retracted position towards its deployed position, during the movement of the gripping clamp (3) rearward along the hollow nose part (2) on a first section of length (S21) of the outer guide surface (21) of the hollow nose part (2), from the first position of the gripping clamp (3) with respect to the hollow nose part (2), the outer guide surface (21) of the hollow nose part (2) comprising a second section of length (S21'), adjacent to the first section of length (S21), configured to ensure the maintaining of the gripping clamp (3) in the deployed position, without increasing the diameter of the elastic front blocking part (31) by radial expansion, in such a way as to authorise the forward movement of the hollow nose part (2) towards the surface (SP) of the part (P) to be drilled to compensate for a relative movement between the guide orifice (11) of the tooling (10) and the surface (SP) of the part (P) to be drilled during the drilling, as well as the deformation of the surface (SP) of the part (P) to be drilled engendered by the drilling stress, and thus allow the control of the stress (F) exerted by the hollow nose part (2) on the surface (SP) of the part (P) to be drilled, and wherein the guide orifice (11) and the drilling tool (1) are configured so that in said deployed position of the gripping clamp (3), the bead (33) protruding radially towards the outside of the elastic front blocking part (31) bears against the distal wall (13) of the tooling (10) surrounding said guide orifice (11), preventing the sliding of the gripping clamp (3) and of the drilling tool (1) with respect to the guide orifice (11) in the direction opposite to the drilling direction (D).

2. Drilling assembly (100) according to claim 1, wherein the hollow nose part (2) includes a distal end (E2), configured to bear against the surface (SP) of the part (P) to be drilled in order to exert the desired stress (F), the outer guide surface (21) of the hollow nose part (2) including:
- a first guide portion (22) extending from near said distal end (E2) of the hollow nose part (2),
- a second guide portion (23), to the rear of said first guide portion (22), forming the second section of length (S21'),
- a linking portion (24) connecting the first guide portion (22) to the second guide portion (23) while flaring out, forming said first section of length (S21),
and wherein the elastic front blocking part (31) of the gripping clamp (3) comprises a bead (36) protruding radially towards the inside comprising said inner guide surface (32) bearing against the outer guide surface (21) of the hollow nose part (2),
and wherein the outer guide surface (21) of the hollow nose part (2) is configured so that:
- the retracted position of the gripping clamp (3) corresponds to the position of the gripping clamp (3) with respect to the hollow nose part (2) in which the inner guide surface (21) is in contact with the first guide portion (22) of the outer guide surface (21) of the hollow nose part (2),
- the passage from the retracted position to the deployed position of the gripping clamp corresponds to the position of the gripping clamp (3) with respect to the hollow nose part (2) in which the inner guide surface (32) slides on the totality of the length of the linking portion (24), said inner guide surface (32) cooperating with the second guide portion (23) in such a way as to guarantee the maintaining in the deployed position of the gripping clamp (3), without increasing the diameter of the elastic front blocking part (31) by radial expansion, in such a way as to authorise the forward movement of the hollow nose part (2) towards the surface (SP) of the part (P) to be drilled to compensate for a relative movement between the guide orifice (11) of the tooling (10) and the surface (SP) of the part (P) to be drilled during the drilling, as well as the deformation of the surface (SP) of the part (P) to be drilled engendered by the drilling stress, and thus allow the control of the stress (F) of the hollow nose part (2) on the surface (SP) of the part (P) to be drilled.

3. Drilling assembly (100) according to claim 2, wherein:
- the first guide portion (22) is substantially cylindrical, having a diameter (D22),
- the second guide portion (23) is substantially cylindrical having a diameter (D23), strictly greater than (D22),
- the linking portion (24) is conical.

4. Drilling assembly (100) according to claim 3, wherein the inner guide surface (36) of the elastic front blocking part (31) includes a cylindrical wall (C32), configured to bear against said first guide portion (22) and against said second guide portion (23).

5. Drilling assembly (100) according to claim 4, wherein the inner guide surface (21) includes a wall having a conical shape (V32), to the rear of said cylindrical wall (C32), having a conicity substantially equal to the conicity of the linking portion (24) of the inner guide surface (21) of the hollow nose part (2).

6. Drilling assembly (100) according to one of claims 1 to 5, wherein the movement mechanism (4) includes two articulation parts (41) each pivotably articulated onto said rear movement part (38) according to two articulation axes (A41, A41') positioned on either side of the longitudinal axis (A3) of the gripping clamp (3) and which are the same, the two articulation axes (A41, A41') of the first articulation part (41) being parallel and symmetrical to the two articulation axes (A41, A41') of the second articulation part (41) with respect to said longitudinal axis (A3) of the gripping clamp (3),
wherein each articulation axis (A41, A41') is received in a bearing (42) configured to slide in a housing (34) having a corresponding shape made in the rear movement part (38), according to a direction perpendicular to the longitudinal axis (A3) of the gripping clamp (3) and to the articulation axis (A41, A41') received in said bearing (42),
wherein each of said articulation parts (41) is pivotably articulated with respect to a fixed plate (43) according to a pivoting axis (A44), perpendicular to said longitudinal axis (A3) of the gripping clamp (3), the pivoting axes (A44) of each of the articulation parts (41) being disposed symmetrically to each other with respect to the longitudinal axis (A3) of the gripping clamp (3), and parallel to said articulation axes (A41, A41') of the parts (41) for articulation onto the rear movement part (38), the pivoting axis (A44) of an articulation part (41) being farther from the longitudinal axis (A3) of the gripping clamp (3) than its articulation axes (A41, A41'),
and wherein said articulation parts (41) are connected to an actuator (45) configured to drive the simultaneous and coordinated counter-rotational pivoting of each of the articulation parts (41) with respect to the fixed plate (43) about each of their pivoting axes (A44), so as to drive the rotation of each of said articulation parts (41) with respect to the rear movement part (38) of the gripping clamp (3) about their respective articulation axes (A41, A41') and the sliding of each of the bearings (42) in their housing (34), generating a sliding of the gripping clamp (3) with respect to the hollow nose part (2) along the longitudinal axis (A3) of the gripping clamp (3).

7. Drilling assembly (100) according to any one of claims 1 to 6, wherein the guide orifice (11) has a substantially cylindrical shape having a length (L11), having a diameter (D11), such that the length (L 11) is strictly less than the length (L31) of the elastic front blocking part (31), and the diameter (D11) is strictly less than the diameter (D33) of the bead (33) protruding radially towards the outside of the elastic front blocking part (31), when the gripping clamp (3) is in the deployed position.

8. Drilling assembly (100) according to claim 7, wherein the elastic front blocking part (31) of the gripping clamp (3) of the drilling tool (1) has an outer guide surface (37) extending to the rear of the bead (33) protruding radially towards the outside, the diameter (D37) of which is between a minimum value (D37min), in said retracted position, and a maximum value (D37max), in said deployed position, such that the maximum value (D37max) of the diameter (D37) of the outer guide surface (37) is strictly less than the diameter (D11) of the guide orifice (11).

9. Method for drilling a part (P) implementing a drilling assembly (100) according to one of claims 1 to 8, comprising the following steps:
- inserting the gripping clamp (3) of the drilling tool (1), in its retracted position, into the guide orifice (11) of the tooling (10), from its mouth (14) on the proximal wall (12) of the tooling (10), until the bead (33) protruding radially towards the outside of the elastic front blocking part (31) entirely exits the guide orifice (11) at its mouth (15) on the distal wall (13) of the tooling (10),
- moving the gripping clamp (3) rearward along the hollow nose part (2) on the first section of length (S21) of the outer guide surface (21) of the hollow nose part (2), until the deployed position of the gripping clamp (3), generating the stopping of the sliding of the drilling tool (1) with respect to the guide orifice (11) in the direction opposite to the drilling direction (D), the bead (33) protruding radially towards the outside of the elastic front blocking part (31) bearing on the distal wall (13) of the tooling (10),
- applying of a controlled stress (F) by the hollow nose part (2) onto the surface (SP) of the part (P) to be drilled, by movement of the gripping clamp (3) by an adjustment travel on the second section of length (S21') of the outer guide surface (21) of the hollow nose part (2), without increasing the diameter of the elastic front blocking part (31), to compensate for a relative movement between the guide orifice (11) of the tooling (10) and the surface (SP) of the part (P) to be drilled during the drilling, as well as the deformation of the surface (SP) of the part (P) to be drilled engendered by the drilling stress.
